# EUROPEAN PATENT APPLICATION

(11) **EP 4 528 205 A1**
(43) Date of publication of application: **26.03.2025**
(21) Application number: 23199167.0
(22) Date of filing: 22.09.2023
(51) Int. Cl.: F28F 9/02

(54) **HEAT EXCHANGER DEVICE AND METHOD FOR MANUFACTURING A HEAT EXCHANGER DEVICE**

(71) Applicant: Röchling Automotive SE, 68165 Mannheim (DE)
(72) Inventor: Traina, Matteo, 38060 Tenno (IT); Monsorno, Davide, 38121 Trento (IT); Ferdinando, Di Pauli, 39100 Bolzano (IT); Chini, Fabrizio, 38060 Isera (IT)
(74) Representative: Ullrich & Naumann PartG mbB

(57) **Abstract**

A heat exchanger device (100) for conducting heat away from an object to be cooled is proposed. The heat exchanger device (100) comprises a metal body (102), wherein the metal body (102) comprises a first surface (104) configured to be connected to the object to be cooled and at least one second surface (106), wherein the at least one second surface (106) comprises a plurality of protrusions (116) and/or a plurality of depressions (124). The heat exchanger device (100) further comprises a plastic shell (108), wherein the plastic shell (108) defines an interior space (110) configured to be filled with a cooling fluid, wherein the plastic shell (108) is connected to the metal body (102) such that the plastic shell (108) surrounds the protrusions (116) and/or fills the depressions (124) in a fluid tight manner, wherein a gap (118) between adjacent protrusions (116) comprise a first cross-sectional area b1 and/or the depressions (124) comprise a first cross-sectional area b1, wherein the protrusions (116) comprise a second cross-sectional area b2 and/or a distance 126 between adjacent depressions (124) comprises a second cross-sectional area b2, wherein the first and second cross-sectional areas are determined at a connection surface (119) of the metal body (102) and a connection surface (120) of the plastic shell (108), wherein a ratio of b1/(b1 +b2) is in a range of 0.1 to 0.8. Further, a method for manufacturing a heat exchanger device (100) is proposed.

## Description

### Technical Field

The present invention relates to a heat exchanger device for conducting heat away from an object to be cooled. The present invention also relates to a method for manufacturing a heat exchanger device. Without any limitation, the present invention is particularly adapted for cooling battery or secondary battery systems for electric drive vehicles which require excessive heat conducted away therefrom.

### Background art

In different technical fields, heat exchanger devices are used for conducting heat away from an object to be cooled. Particularly, battery or secondary battery systems for electric drive vehicles require a device for conducting excessive heat away therefrom. It is particularly important that such cooling components have the lowest possible weight, are as leak-proof as possible, so that coolant cannot escape to the outside, and can also be produced cost-effectively and reliably.

Such cooling components are generally made entirely of metal, since metal has high thermal conductivity. However, metal as a raw material is comparatively expensive and also has a comparatively large weight. Furthermore, the necessary shaping of the metal during production is cost-intensive.

DE 10 2019 008 611 A1 discloses a cooling component for dissipating heat from objects to be cooled, such as secondary batteries, with a metal body, in particular made of aluminum, which has an inner side adjoining a cooling liquid space of the cooling component for transferring heat from the metal body has cooling liquid located in the cooling liquid space and an outer side adjoining the area surrounding the component for transferring heat from an object to be cooled to the metal body. The cooling component has a base body made in particular of fibre-reinforced plastic, which together with the metal body delimits the coolant space and which is connected to the metal body in a liquid-tight and non-detachable manner.

Despite the advantages involved in known heat exchanger devices, several technical challenges remain. Known solutions might not be leak tight or strong enough. Further, if the part is formed by large surface metal/plastic components, deformation due to different thermal dilatation coefficients will occur.

### Problem to be solved

It is therefore desirable to provide heat exchanger devices and methods for manufacturing the same, which address the above mentioned shortcomings of known devices and methods. Specifically, a heat exchanger device and a method for manufacturing a heat exchanger device shall be proposed, which allow for a metal/plastic heat exchanger that can handle fluids liquid, vapor and gas, is leak tight, mitigates the deformations due to differential thermal expansion, and is able to resist the mechanical loads it is exposed to.

### Summary

This problem is addressed by a heat exchanger device for conducting heat away from an object to be cooled and a method for manufacturing a heat exchanger device with the features of the independent claims. Advantageous embodiments which might be realized in an isolated fashion or in any arbitrary combinations are listed in the dependent claims as well as throughout the specification.

In a first aspect of the present invention, a heat exchanger device for conducting heat away from an object to be cooled is proposed. The heat exchanger device comprises a metal body. The metal body comprises a first surface configured to be connected to the object to be cooled and at least one second surface. The at least one second surface comprises a plurality of protrusions and/or a plurality of depressions.

The heat exchanger device further comprises a plastic shell. The plastic shell defines an interior space configured to be filled with a cooling fluid. The plastic shell is connected to the metal body such that the plastic shell surrounds the protrusions and/or fills the depressions in a fluid tight manner. A gap between adjacent protrusions comprises a first cross-sectional area b1 and/or the depressions comprise a first cross-sectional area b1. The protrusions comprise a second cross-sectional area b2 and/or a distance between adjacent depressions comprises a second cross-sectional area b2. The first and second cross-sectional areas are determined at a connection surface of the metal body and a connection surface of the plastic shell. A ratio of b1/(b1 +b2) is in a range of 0.1 to 0.8.

The advantage of the present invention is to obtain a heat exchanger that is lighter, i.e. a large part of it is made of plastics instead of metal, and the technology for welding plastic to metal is further enhanced with respect to the state of the art. The present invention also relates to special feature of the plastic shell in order to prevent deformation in working conditions due to the different thermal dilatation of the two materials, and this is quite important in case of large parts. Additionally, the present invention allows to obtain a multifunctional heat exchanger. Particularly, the present invention proposes to use a three-dimensionally structured surface provided with depressions and/or elevations. Especially in the case of manufacturing processes that produce a deeper, spatially more pronounced surface structure, it is of great benefit to control this structure in order to increase the strength of the connection of the metal body and the plastic shell, as well as its other physical properties such as tensile strength, shear strength, tensile elongation at break and shear elongation at break, tightness, and the like. Particularly, the ratio is chosen b1/(b1 +b2) depending on the properties of the involved materials so as to optimize the connection strength. The actual selection of the optimal parameters is significantly influenced by metal strength, plastic strength, type of plastic/metal boundary connection, i.e. physical and/or also chemical, if chemical, with strong, covalent or weak Van der Waals chemical bonds, and viscosity of the plastic < 10⁴ Pa^{∗}s) at the processing temperature. The more fluid the molten plastic, the better the wetting and penetration and the greater the depth h can be in relation to the widths b1 and b2.

A high depth of the recesses/elevations, e.g. higher than 100microns, can guarantee a good mechanical resistance of the j oint, even when the ratio b1/(b1+b2) is smaller than 0.5, but in that case the leak tightness would be compromised. When a higher leak tightness is desired, the b1/(b1+b2) needs to be high. The joint geometry needs to be homogeneous as much as possible along the border to the outside to guarantee leak tightness, therefore thinner structures, in particular high frequency of recesses/elevations over the structured area, are more indicated, inside can be spots for mechanical resistance or spots and thin line. A high depth, e.g. higher than 100 microns, of the recesses/elevations together with a small ratio b1/(b1+b2), e.g. smaller than 0.5, can help to obtain a faster process.

The metal body may be plate shaped. Thus, the metal body may be rather thin allowing to decrease the total weight.

The protrusions and/or depressions may comprise a height in a range of 0.001 mm to 0.5 mm, preferably in a range of 0.01 mm to 0.5 mm, and more preferably in a range of 0.1 mm to 0.5 mm. Such dimensions of the protrusions and/or depressions allow to maximize the tensile strength in the edge areas, and the tightness and shear strength in the central area.

The protrusions and /or the depressions may be shaped so as to form undercuts engaged by the plastic shell. Undercuts allow a strong engagement of the plastic material and the metal body which cannot be released without destruction. Further, the tightness characteristics are enhanced.

A ratio of a total area of the undercuts and a total surface area of the protrusions and/or depressions may be in a range of 0 % to 50.0% and preferably in a range of 1.0 % to 50.0% and more preferably in a range of 10.0% to 50.0 %. Thus, a sufficient undercut area is provided so as to enhance the connection strength and the tightness characteristics.

A ratio of a total perimeter of the gap between adjacent protrusions and/or a total perimeter of a depression to a sum of twice a height of the protrusions and/or depressions and b1 may be greater than 1.5. Thus, the depressions and/or protrusion are not shaped straight or smooth but have an uneven shape so as to enhance the meshing of the plastic material and the metal material.

The material of the metal body may comprise a first rigidity R1 and the material of the plastic shell may comprise a second rigidity R2. The first cross-sectional area b1 and the second cross-sectional area b2 may be formed such that a ratio b2/b1 is substantially proportional to a ratio R2/R1. Thus, the dimensions of the protrusions and/or depressions and the surrounding areas are adapted to the material characteristics of the components to be connected which enhance the meshing of the plastic material and the metal material. The rigidity is defined by a material-specific representative quantity such as elastic modulus.

The metal body and/or the plastic shell may comprise deformations being wave-like shaped. Thus, at least one of the plastic shell and metal body may have a geometry that can compensate deformations due to thermal dilatation and expansion. Thus, a shape is provided that compensates the higher thermal dilatation by deforming in a controlled way without causing deformation of the entire finished part.

The wave-like deformations may comprise a height being greater than a thickness of the metal body and/or plastic shell at least by factor 3. Thus, the waveform shape has a height which is at least 3 times bigger than the shell wall thickness in order to obtain a sufficient dimensional compensation.

The wave-like deformations may be connected to the plastic shell and/or the metal body. Thus, also in portions of the wave shape there may be a connection of the plastic shell and the metal body.

The plastic shell may comprise ribs. The ribs may be connected to the metal body. The ribs further enhance the stability of the connection of the plastic shell and the metal body.

The metal body may be formed by a plurality of metal body portions. Thus, the metal body may be characterized by a shape that compensates the lower thermal dilatation with respect to the plastic shell. The metal body can be deformed before the joining process, during the cooling down phase of the process, right after joining with plastic shell, or after the complete joining process.

The metal body portions may be substantially plate shaped. Thus, a shape is provided that compensates the lower thermal dilatation with respect to the plastic shell.

The metal body portions may be spaced apart from one another by a distance gap. A compensation joint may be fitted in the distance gap. Thus, thermal expansions can be reliably compensated.

The compensation joint may be made of a thermally conductive thermoplastic elastomer. Thus, in the gap between the metal plates, a compensation joint can be fitted, which for example can be made of a thermally conductive thermoplastic elastomer.

The compensation joint may be integrated into the plastic shell. Thus, the compensation joint can be made compact.

The plastic shell may be formed by a plurality of plastic shell portions. In this case, the metal body can be the bottom of a battery pack or connected to a bottom of the battery pack, where multiple plastic shells containing the ribs pattern to guide the fluid flow are integrated.

The plastic shell portions may be substantially plate shaped. Thus, the plastic shell portions can be arranged as appropriate allowing a flexible arrangement.

The fluid tight connection of the metal body and the plastic shell may be formed by means of direct engagement of the plastic shell and the metal body. Thus, both parts are in direct contact which increases the connection strength as well as the tightness characteristics.

The fluid tight connection of the metal body and the plastic shell may be formed by means of a material engagement and/or a positive locking connection. Thus, both parts are permanently connected which increases the connection strength as well as the tightness characteristics.

The fluid tight connection of the metal body and the plastic shell may be formed by means of a physical connection and/or chemical connection. Thus, the connection strength as well as the tightness characteristics may be further improved.

The depressions/and/or protrusions at the second surface of the metal body may be formed by means of surface activation. Thus, the protrusions and/or depressions may be formed as appropriate.

The metal body and the plastic shell may be adhered to one another by means of at least one glue and/or at least one resin. Thus, the connection stability is further improved. The junction between plastic and metal can also be obtained by a chemical agent that functionalizes the metal surface to be suitable for the resin to adhere. This chemical agent is composed by molecules containing a group that bonds with the metal and a group that bonds with the resin. The junction can also be obtained by a glue that adheres to both metal and resin.

The metal body and the plastic shell may be connected to one another by means of at least partially injection molding the material of the plastic shell.

The plastic shell may be formed in more than one step of the injection molding such that plastic shell comprises over molded portions. On the pre-treated metal by way of one of the abovementioned methods, including the creation of recesses on the surface a layer of resin may be over injected, which can be a resin with additive for compatibility with other resins to be welded, on the treated surface. The other half shell, entirely made by resin being the same resin or a compatible resin will be welded in a second step of the process, along the over injected-on-the-metal resin border.

The heat exchanger device may further comprise at least one battery cell holder. Thus, a battery may be arranged at the heat exchanger device. Thus, the final part has additional functions with respect to the heat exchange. For example, it can hold battery cells in place, guarantee structural stability, transfer the mechanical load through the metal/plastic junction, include part of the casing of battery modules, the metal plate can be the bottom of the battery pack where one or more plastic shells can be welded, high voltage enclosures, electronic control devices, more in general thermal management multifunctional components.

The battery cell holder may be connected to the first surface of the metal body. Thereby, a battery can be directly connected to the metal body which improves the cooling efficiency.

The depressions and/or protrusions may be shaped substantially similar to a Christmas tree. This shape provides best performance regarding the connection strength and the tightness.

In a further aspect of the present invention, a method for manufacturing a heat exchanger device is proposed.

The method comprises the following steps, which may be performed in the given order. Still, a different order is possible. The method may comprise additional steps which are not mentioned. It is further possible to perform one or more or all of the method steps repeatedly. Further, two or more of the method steps may be performed simultaneously or in a timely overlapping fashion.

The method comprises the following steps:
a) providing a metal body, wherein the metal body comprises a first surface configured to be connected to the object to be cooled and at least one second surface,
b) forming a plurality of protrusions and/or a plurality of depressions at the at least one second surface, wherein a gap between adjacent protrusions comprise a first cross-sectional area b1 and/or the depressions comprise a first cross-sectional area b1, wherein the protrusions comprise a second cross-sectional area b2 and/or a distance between adjacent depressions comprises a second cross-sectional area b2, wherein the first and second cross-sectional areas are determined at a connection surface of the metal body and a connection surface of the plastic shell, wherein a ratio of b1/(b1 +b2) is in a range of 0.1 to 0.8,
c) providing a plastic shell, wherein the plastic shell defines an interior space configured to be filled with a cooling fluid,
d) heating the metal body to a predetermined temperature, particularly a plastic melting temperature of the plastic shell, and
e) connecting the plastic shell to the metal body in a heated state such that the plastic shell surrounds the protrusions and/or fills the depressions in a fluid tight manner.

Thus, the method proposes a heating up of the metal plate at a temperature that allows melting of the plastic and penetration of the molten plastic in the recesses or gaps between the protrusions of the metal in the second step of the process. The plastic shell is also heated up to a precise temperature in order to compensate for different thermal dilatation.

Connecting the plastic shell to the metal body may include inserting the metal body in a mold and forming the plastic shell around the second surface of the metal body by means of injection molding the plastic material of the plastic shell. Thus, a control flow for the molten plastic is provided. Particularly, the process of joining plastic and metal may foresee a vacuum system integrated in the injection molding tool, able to straighten the half shells deformed due to previous process steps, or to the pre-heating related to the present process before they are joined together, allowing repeatability of the process.

The plastic shell may be pressed to the second surface of the metal body in the heated state. Thus, a rigid joint of the metal body and the plastic shell is provided.

The method may further comprise cooling the heat exchanger device after connecting the plastic shell to the second surface of the metal body in a controlled manner. Thus, the cooling of the part will happen in a controlled way, slow enough, i.e. <15°C/min, in order to reduce the residual stresses on the plastic shell and on the joint. This is especially relevant for large parts which undergo high absolute deformation.

When the ratio between the coefficients of linear thermal expansion (CLTE) of the two materials is higher than 1.5, overmoulding the welding border is suggested. In this case, the process optionally foresees:
- insertion of metal body in a injection molding tool;
- local heating up of the injection molding tool in order to keep the metal plate at a target temperature to keep the molten plastic fluid enough to penetrate the recesses in the metal, i.e. melting temperature of polymer + 20°C or higher;
- over injection of the plastic material, preferably helped by a vacuum system, to drive it into the recesses in the metal;
- controlled cool down of the part;
- welding of the plastic shell by only heating up the welding border, e.g.: use of cooled masks, laser welding, vibration welding or the like.

The method may be computer-implemented. Thereby, the method may be carried out under control of a computer which decreases the amount of manpower and costs.

The term "heat exchanger device" as used herein is a broad term and is to be given its ordinary and customary meaning to a person of ordinary skill in the art and is not to be limited to a special or customized meaning. The term specifically may refer, without limitation, to any device that is configured to be used to transfer heat between a source and a working fluid. Heat exchanger devices can be used in both cooling and heating processes. The fluids may be separated by a solid wall to prevent mixing. The classic example of a heat exchanger is found in an internal combustion engine in which a circulating fluid known as engine coolant flows through radiator coils and air flows past the coils, which cools the coolant and heats the incoming air. Another example is the heat sink, which is a passive heat exchanger that transfers the heat generated by an electronic or a mechanical device to a fluid medium, often air or a liquid coolant. The term may specifically refer to a device that is configured to convey heat away from an object to be cooled while transferring the heat to a cooling fluid or coolant by means of a metal body separating the heat source from the cooling fluid or coolant.

The term "metal body " as used herein is a broad term and is to be given its ordinary and customary meaning to a person of ordinary skill in the art and is not to be limited to a special or customized meaning. The term specifically may refer, without limitation, to a body made of metal. The metal body may basically comprise any three dimensionally shape. Particularly, the metal body may comprise a shape of a thin metal plate.

The term "protrusion" as used herein is a broad term and is to be given its ordinary and customary meaning to a person of ordinary skill in the art and is not to be limited to a special or customized meaning. The term specifically may refer, without limitation, to something that sticks out from a surface.

The term "depression" as used herein is a broad term and is to be given its ordinary and customary meaning to a person of ordinary skill in the art and is not to be limited to a special or customized meaning. The term specifically may refer, without limitation, to a portion that is sunken or depressed below the surrounding area.

The term "plastic shell" as used herein is a broad term and is to be given its ordinary and customary meaning to a person of ordinary skill in the art and is not to be limited to a special or customized meaning. The term specifically may refer, without limitation, to a shell made of a plastic material. The shell is particularly formed so as to define an interior space configured to be filled with a cooling fluid. The filling may be temporary or permanent. Thus the shell is configured to at least temporarily store a fluid. With other words, the shell may be formed similar to a casing, tank, vessel or the like.

The term "cooling fluid" as used herein is a broad term and is to be given its ordinary and customary meaning to a person of ordinary skill in the art and is not to be limited to a special or customized meaning. The term specifically may refer, without limitation, to a fluid that is also called coolant. A coolant is a substance, typically liquid but may also be a gas, that is used to reduce or regulate the temperature of a system. An ideal coolant has high thermal capacity, low viscosity, is low-cost, non-toxic, chemically inert and neither causes nor promotes corrosion of the cooling system. Some applications also require the coolant to be an electrical insulator. This coolant can either keep its phase and stay liquid or gaseous, or can undergo a phase transition, with the latent heat adding to the cooling efficiency. The latter, when used to achieve below-ambient temperature, is more commonly known as refrigerant.

The term "undercut" as used herein is a broad term and is to be given its ordinary and customary meaning to a person of ordinary skill in the art and is not to be limited to a special or customized meaning. The term specifically may refer, without limitation, to a special type of recessed surface that is inaccessible using a straight tool. In turning, it refers to a recess in a diameter generally on the inside diameter of the part. In milling, it refers to a feature which is not visible when the part is viewed from the spindle. In molding, it refers to a feature that cannot be molded using only a single pull mold. In printed circuit board construction, it refers to the portion of the copper that is etched away under the photoresist.

The term "rigidity" as used herein is a broad term and is to be given its ordinary and customary meaning to a person of ordinary skill in the art and is not to be limited to a special or customized meaning. The term specifically may refer, without limitation, to a material characteristic which is also called shear modulus or modulus of rigidity. Particularly, this term refers to the tendency of a substance to retain/maintain their shape when subjected to outside force. Shear modulus or modulus of rigidity, denoted by G, or sometimes S or µ, is a measure of the elastic shear stiffness of a material and is defined as the ratio of shear stress to the shear strain. The derived SI unit of shear modulus is the Pascal (Pa). The term may refer, without limitation, specifically to a property of a material that describes its ability to withstand external loads or forces without failing or breaking. The strength of a material can be a critical factor in selecting materials for a particular application because it determines how safely and reliably the material can perform under load. For example, the strength of a material can be characterized by its tensile strength. This value describes the maximum tensile force a material can withstand before it breaks. Tensile strength can be measured in mega-pascals (MPa) or newtons per square millimeter (N/mm²). Other important material properties that describe strength include, in particular, shear strength, fatigue strength, plasticizing limit and creep rupture strength. All these parameters are also influenced by environmental conditions such as temperature, fluid wetting and the like.

The term "surface activation" as used herein is a broad term and is to be given its ordinary and customary meaning to a person of ordinary skill in the art and is not to be limited to a special or customized meaning. The term specifically may refer, without limitation, to process of altering the surface energy, in particular the surface chemistry, of a material in order to favor a certain property such as hydrophobicity, reactivity, bonding, morphology, etc. Exemplary methods are plasma activation and surface chemistry modification. Particularly, the surface activation used in the present invention is used to enhance to bonding characteristics of the plastic shell and metal body.

The term "compensation joint" as used herein is a broad term and is to be given its ordinary and customary meaning to a person of ordinary skill in the art and is not to be limited to a special or customized meaning. The term specifically may refer, without limitation, to any joint configured to compensate any differences in the thermal expansion of the materials joint. Particularly, the compensation joint may be made by a thermally conductive thermoplastic elastomer.

Summarizing and without excluding further possible embodiments, the following embodiments may be envisaged:
Embodiment 1: A heat exchanger device for conducting heat away from an object to be cooled, comprising
   a metal body, wherein the metal body comprises a first surface configured to be connected to the object to be cooled and at least one second surface, wherein the at least one second surface comprises a plurality of protrusions and/or a plurality of depressions, and
   a plastic shell, wherein the plastic shell defines an interior space configured to be filled with a cooling fluid, wherein the plastic shell is connected to the metal body such that the plastic shell surrounds the protrusions and/or fills the depressions in a fluid tight manner, wherein a gap between adj acent protrusions comprise a first cross-sectional area b1 and/or the depressions comprise a first cross-sectional area b1, wherein the protrusions comprise a second cross-sectional area b2 and/or a distance between adjacent depressions comprises a second cross-sectional area b2, wherein the first and second cross-sectional areas are determined at a connection surface of the metal body and a connection surface of the plastic shell, wherein a ratio of b1/(b 1 +b2) is in a range of 0.1 to 0.8.
Embodiment 2: The heat exchanger device according to the preceding embodiment,
   wherein the protrusions and/or depressions comprise a height in a range of 0.001 mm to 0.5 mm, preferably in a range of 0.01 mm to 0.5 mm and more preferably in a range of 0.1 mm to 0.5 mm.
Embodiment 3: The heat exchanger device according to any preceding embodiment,
   wherein the protrusions and/or the depressions are shaped so as to form undercuts engaged by the plastic shell.
Embodiment 4: The heat exchanger device according to the preceding embodiment,
   wherein a ratio of a total area of the undercuts and a total surface area of the protrusions and/or depressions is in a range of 0 % to 50.0% and preferably in a range of 1.0 % to 50.0% and more preferably in a range of 10.0% to 50.0 %.
Embodiment 5: The heat exchanger device according to any preceding embodiment,
   wherein a ratio of a total perimeter of the gap between adjacent protrusions and/or a total perimeter of a depression to a sum of twice a height of the protrusions and/or depressions and b1 is greater than 1.5.
Embodiment 6: The heat exchanger device according to any preceding embodiment,
   wherein the material of the metal body comprises a first rigidity R1 and the material of the plastic shell comprises a second rigidity R2, wherein the first cross-sectional area b1 and the second cross-sectional area b2 are formed such that a ratio b2/b1 is substantially proportional to a ration R1/R2.
Embodiment 7: The heat exchanger device according to any preceding embodiment,
   wherein the metal body and/or the plastic shell comprise deformations being a wave-like shaped.
Embodiment 8: The heat exchanger device according to the preceding embodiment,
   wherein the wave-like deformations comprise a height being greater than a thickness of the metal body and/or plastic shell at least by factor 3.
Embodiment 9: The heat exchanger device according to any of the two preceding embodiments, wherein the wave-like deformations are connected to the plastic shell and/or the metal body.
Embodiment 10: The heat exchanger device according to embodiment 6 or 7, wherein the plastic shell comprises ribs, wherein the ribs are connected to the metal body.
Embodiment 11: The heat exchanger device according to any preceding embodiment,
   wherein the metal body is formed by a plurality of metal body portions.
Embodiment 12: The heat exchanger device according to the preceding embodiment,
   wherein the metal body portions are substantially plate shaped.
Embodiment 13: The heat exchanger device according to embodiment 10 or 11, wherein the metal body portions are spaced apart from one another by a distance gap, wherein a compensation joint is fitted in the distance gap.
Embodiment 14: The heat exchanger device according to the preceding embodiment,
   wherein the compensation joint is made of a thermally conductive thermoplastic elastomer.
Embodiment 15: The heat exchanger device according to embodiment 12 or 13, wherein the compensation joint is integrated into the plastic shell.
Embodiment 16: The heat exchanger device according to any preceding embodiment,
   wherein the plastic shell is formed by a plurality of plastic shell portions.
Embodiment 17: The heat exchanger device according to the preceding embodiment,
   wherein the plastic shell portions are substantially plate shaped.
Embodiment 18: The heat exchanger device according to any preceding embodiment,
   wherein the fluid tight connection of the metal body and the plastic shell is formed by means of direct engagement of the plastic shell and the metal body.
Embodiment 19: The heat exchanger device according to any preceding embodiment,
   wherein the fluid tight connection of the metal body and the plastic shell is formed by means of a material engagement and/or a positive locking connection.
Embodiment 20: The heat exchanger device according to any preceding embodiment,
   wherein the fluid tight connection of the metal body and the plastic shell is formed by means of a physical connection and/or chemical connection.
Embodiment 21: The heat exchanger device according to any preceding embodiment,
   wherein the depressions/and/or protrusions at the second surface of the metal body are formed by means of surface activation.
Embodiment 22: The heat exchanger device according to any preceding embodiment,
   wherein the metal body and the plastic shell are adhered to one another by means of at least one glue and/or at least one resin.
Embodiment 23: The heat exchanger device according to any preceding embodiment,
   wherein the metal body and the plastic shell are connected to one another by means of at least partially injection molding the material of the plastic shell.
Embodiment 24: The heat exchanger device according to the preceding embodiment,
   wherein the plastic shell is formed in more than one step of the injection molding such that plastic shell comprises over molded portions.
Embodiment 25: The heat exchanger device according to any preceding embodiment, further comprising at least one battery cell holder.
Embodiment 26: The heat exchanger device according to the preceding embodiment,
   wherein the battery cell holder is connected to the first surface of the metal body.
Embodiment 27: The heat exchanger device according to any preceding embodiment,
   wherein the depressions and/or protrusions are shapes substantially similar to a Christmas tree.
Embodiment 28: A method for manufacturing the heat exchanger device according to any preceding embodiment, comprising the following steps
   a) providing a metal body, wherein the metal body comprises a first surface configured to be connected to the object to be cooled and at least second surface,
   b) forming a plurality of protrusions and/or a plurality of depressions at the second surface, wherein a gap between adjacent protrusions comprise a first cross-sectional area b1 and/or the depressions comprise a first cross-sectional area b1, wherein the protrusions comprise a second cross-sectional area b2 and/or a distance between adjacent depressions comprises a second cross-sectional area b2, wherein the first and second cross-sectional areas are determined at a connection surface of the metal body and a connection surface of the plastic shell, wherein a ratio of b1/(b1 +b2) is in a range of 0.1 to 0.8,
   c) providing a plastic shell, wherein the plastic shell defines an interior space configured to be filled with a cooling fluid,
   d) heating the metal body to a predetermined temperature, particularly a plastic melting temperature of the plastic shell, and
   e) connecting the plastic shell to the metal body in a heated state such that the plastic shell surrounds the protrusions and/or fills the depressions in a fluid tight manner.
Embodiment 29: The method according to anyone of the preceding method embodiments,
   wherein connecting the plastic shell to the metal body includes inserting the metal body in a mold and forming the plastic shell around the second surface of the metal body by means of injection molding the plastic material of the plastic shell.
Embodiment 30: The method according to anyone of the preceding method embodiments,
   wherein the plastic shell is pressed to the second surface of the metal body in the heated state.
Embodiment 31: The method according to anyone of the preceding method embodiments, further comprising cooling the heat exchanger device after connecting the plastic shell to the second surface of the metal body in a controlled manner.
Embodiment 32: The method according to anyone of the preceding method embodiments,
   wherein the method is computer-implemented.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows a perspective view of a heat exchanger device according to the present invention;
- Figure 2: shows an enlarged cross-sectional view of the heat exchanger device according to an embodiment of the present invention;
- Figures 3a and 3b: show in schematical illustrations enlarged cross-sectional views of heat exchanger devices according to other embodiments of the present invention;
- Figure 4: shows an enlarged cross-sectional view of the heat exchanger device according to another embodiment of the present invention;
- Figure 5: shows an enlarged cross-sectional view of the heat exchanger device according to another embodiment of the present invention;
- Figure 6: shows an enlarged cross-sectional view of the heat exchanger device according to another embodiment of the present invention;
- Figure 7: shows an enlarged cross-sectional view of the heat exchanger device according to another embodiment of the present invention;
- Figure 8: shows an enlarged cross-sectional view of the heat exchanger device according to another embodiment of the present invention;
- Figure 9: shows an enlarged cross-sectional view of the heat exchanger device according to another embodiment of the present invention;
- Figure 10: shows an enlarged cross-sectional view of the heat exchanger device according to another embodiment of the present invention;
- Figure 11: shows an enlarged cross-sectional view of the heat exchanger device according to another embodiment of the present invention;
- Figure 12: shows an enlarged cross-sectional view of the heat exchanger device according to another embodiment of the present invention; and
- Figure 13: shows a flow chart of a method for manufacturing the heat exchanger device.

### Detailed description of the embodiments

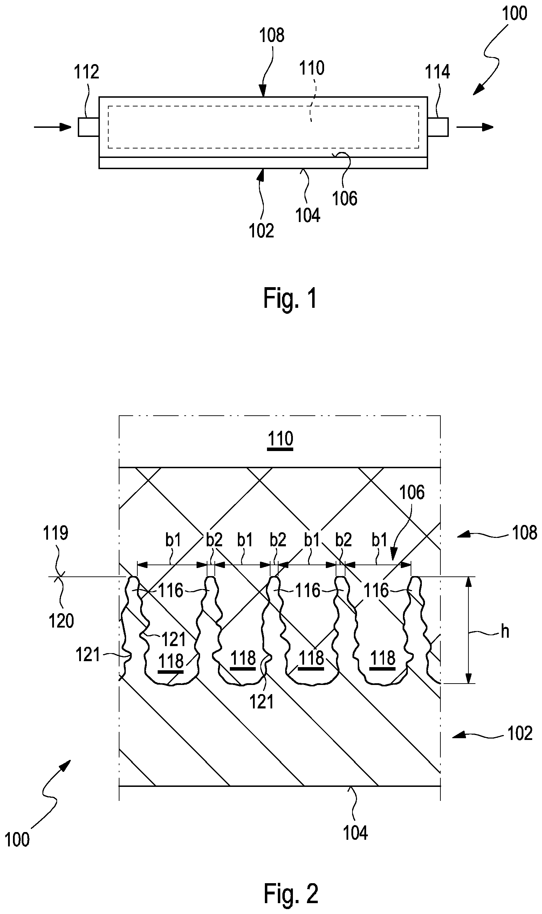

Figure 1 shows a perspective view of a heat exchanger device 100 according to the present invention. The heat exchanger device 100 is configured to conduct heat away from an object to be cooled. The object to be cooled may be a battery or a secondary battery. The heat exchanger device 100 comprises a metal body 102. The metal body 102 may be made of any metal material or any alloy that comprises a rather high thermal conductivity such as aluminium, titan or tin. The metal body 102 may be substantially plate shaped. The metal body 102 comprises a first surface 104 configured to be connected to the object to be cooled and at least a second surface 106. The second surface 106 may be located opposite the first surface 104.

The heat exchanger device 100 comprises a plastic shell 108. The plastic shell 108 is preferably a constructional member made by injection moulding. The plastic shell 108 may be made of a fibre reinforced plastic material such as a thermoplastic material. The plastic shell 108 defines an interior space 110 configured to be filled with a cooling fluid and coolant, respectively. With this arrangement, the metal body 102 serves for effectively transferring the heat to be conducted away from the object to the cooling fluid whereas the plastic shell 108 serves for forming walls defining the interior space 110 for the cooling fluid.

The plastic shell 108 may comprise an inlet 112 and an outlet 114 being in fluid communication with the interior space 110. The inlet 112 may be configured to supply the cooling fluid to the interior space 110 and the outlet 114 may be configured to discharge the cooling fluid from the interior space 110. Thereby the cooling fluid may be guided or flow through the interior space 110. The inlet 112 and the outlet 114 may include separate openings in the plastic shell 108. Alternatively, the inlet 112 and outlet 114 may include a common opening in the plastic shell 108.

Figure 2 shows an enlarged cross-sectional view of the heat exchanger device 100 according to an embodiment of the present invention. The second surface 106 comprises a plurality of protrusions 116. The protrusions 116 may be formed by surface activation. The plastic shell 108 is connected to the metal body 102 such that the plastic shell 108 surrounds the protrusions 116 in a fluid tight manner. Particularly, the plastic shell 108 engages the protrusions 116 in a manner such that the plastic shell 108 may not be removed or released from the metal boy without destruction. Thus, there is formed a permanent connection of the metal body 102 and the plastic shell 108. The fluid tight connection of the metal body 102 and the plastic shell 108 is formed by means of direct engagement of the plastic shell 108 and the metal body 102. Particularly, the fluid tight connection of the metal body 102 and the plastic shell 108 is formed by means of a material engagement and/or a positive locking connection. More particularly, the fluid tight connection of the metal body 102 and the plastic shell 108 is formed by means of a physical connection. In any case, in order to provide a fluid tight connection even with the metal body 102 and plastic shell 108 formed as large parts, the protrusions 116 are formed in a specific design as will be explained in further detail hereinafter.

A gap 118 between adjacent protrusions 116 comprises a first cross-sectional area b1. The protrusions 116 comprise a second cross-sectional area b2. The first and second cross-sectional areas b1 and b2 are determined at a connection surface 119 of the metal body 102 and a connection surface 120 of the plastic shell 108. In some embodiments and depending on the shape of the protrusions 116, the first and second cross-sectional areas b1 and b2 may be determined at half height h of the protrusions 116. A ratio of b1/(b1 +b2) is in a range of 0.1 to 0.8. As is particularly shown, the material of the plastic shell 108 completely fills the gap 118 between the protrusions 116. The protrusions 116 comprise a height h in a range of 0.001 mm to 0.5 mm, preferably in a range of 0.01 mm to 0.5 mm, and more preferably in a range of 0.1 mm to 0.5 mm. The protrusions 116 may be shaped so as to form undercuts 121 engaged by the plastic shell 108. A ratio of a total area of the undercuts 121 and a total surface area of the protrusions 116 may be in a range of 0 % to 50.0% and preferably in a range of 1.0 % to 50.0% and more preferably in a range of 10.0% to 50.0 %. Further, a ratio of a total perimeter 122 of the gap 118 between adjacent protrusions 116 to a sum of twice a height h of the protrusions 116 and b1 is greater than 1.5. Furthermore, the height is in a range of 0.5 to 3 times of a minimum width of the gap 118, preferably 1.5 to 2.0 times of the minimum width of the gap 118.

Further, the materials of the metal body 102 and the plastic shell 108 are chosen according to specific requirements to provide a sufficient fluid tight connection. Particularly, the material of the metal body 102 comprises a first rigidity R1 and the material of the plastic shell 108 comprises a second rigidity R2. The first cross-sectional area b1 and the second cross-sectional area b2 are formed such that a ratio b2/b1 is substantially proportional to a ratio R1/R2. The ratio R1/R2 is intended to be in a range of 0.1 to 3000 and preferably 2.0 to 20. For example, the metal body 102 may be made of steal 42CrMo4 having a first rigidity R1 of approximately 900 MPa and the plastic shell 108 may be made of PA66 having a second rigidity R2 determined at 90 °C of approximately 30MPa revealing a ratio R1/R2 of 900 MPa/30 MPa = 30. As another example, the metal body 102 may be made of aluminium 1070 having a first rigidity R1 determined at 90°C of approximately 900 MPa and the plastic shell 108 may be made of PA66 having a second rigidity R2 determined at 90 °C of approximately 30MPa revealing a ratio R1/R2 of 100 MPa/30 MPa = 3.33.

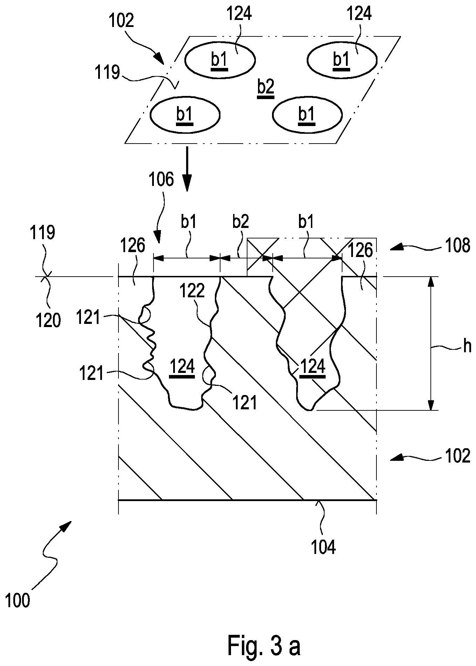

Figure 3a shows in a schematical illustration an enlarged cross-sectional view of the heat exchanger device 100 according to another embodiment of the present invention. Hereinafter, only the differences from the embodiment shown in Figure 2 will be described and like constructional members and features are described by like reference numerals. The second surface 106 comprises a plurality of depressions 124. As shown in the top portion of Figure 3a, which represents a schematical top view, the depressions 124 may comprise a circular or oval cross-sectional area. The depressions 124 may be formed by surface activation. The plastic shell 108 is connected to the metal body 102 such that the plastic shell 108 surrounds the protrusions 116 in a fluid tight manner. Particularly, the plastic shell 108 engages the protrusions 116 in a manner such that the plastic shell 108 may not be removed or released from the metal boy without destruction. Thus, there is formed a permanent connection of the metal body 102 and the plastic shell 108. The fluid tight connection of the metal body 102 and the plastic shell 108 is formed by means of direct engagement of the plastic shell 108 and the metal body 102. Particularly, the fluid tight connection of the metal body 102 and the plastic shell 108 is formed by means of a material engagement and/or a positive locking connection. More particularly, the fluid tight connection of the metal body 102 and the plastic shell 108 is formed by means of a physical connection. In any case, in order to provide a fluid tight connection even with the metal body 102 and plastic shell 108 formed as large parts, the protrusions 116 are formed in a specific design as will be explained in further detail hereinafter.

The depressions 124 comprise a first cross-sectional area b1. A distance 126 between adjacent depressions 124 comprises a second cross-sectional area b2. The first and second cross-sectional areas b1 and b2 are determined at the connection surface 119 of the metal body 102 and the connection surface 120 of the plastic shell 108. In some embodiments and depending on the shape of the depressions, the first and second cross-sectional areas b1 and b2 may be determined at half height h of the depressions 124. A ratio of b1/(b1 +b2) is in a range of 0.1 to 0.8. The depressions 124 comprise a height h in a range of 0.001 mm to 0.5 mm, preferably in a range of 0.01 mm to 0.5 mm and more preferably in a range of 0.1 mm to 0.5 mm. The depressions 124 may be shaped so as to form undercuts 121 engaged by the plastic shell 108. A ratio of a total area of the undercuts 121 and a total surface area of the depressions 124 is in a range of 0 % to 50.0% and preferably in a range of 1.0 % to 50.0% and more preferably in a range of 10.0% to 50.0 %. A ratio of a total perimeter 122 of a depression to a sum of twice a height of depressions 124 and b1 is greater than 1.5.

The material of the metal body 102 comprises a first rigidity R1 and the material of the plastic shell 108 comprises a second rigidity R2. The first cross-sectional area b1 and the second cross-sectional area b2 are formed such that a ratio b2/b 1 is substantially proportional to a ratio R1/R2. The ratio R1/R2 and the materials of the metal body 102 and the plastic shell 108 may be as described above with reference to the embodiment shown in Figure 2.

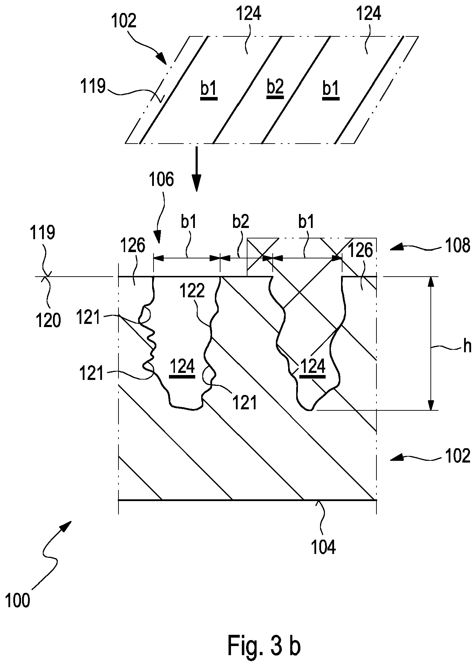

Figure 3b shows in a schematical illustration an enlarged cross-sectional view of the heat exchanger device 100 according to another embodiment of the present invention. Hereinafter, only the differences from the embodiment shown in Figure 3a will be described and like constructional members and features are described by like reference numerals. As shown in the top portion of Figure 3b, which represents a schematical top view, the depressions 124 may be formed similar to grooves and, thus, comprise a longitudinal cross-sectional area.

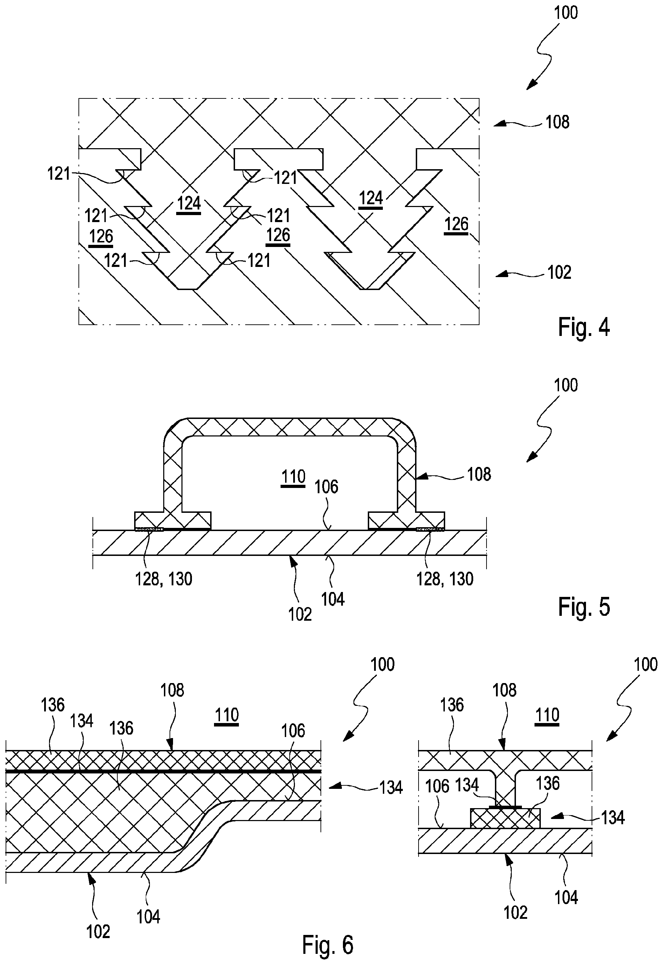

Figure 4 shows an enlarged cross-sectional view of the heat exchanger device 100 according to another embodiment of the present invention. Hereinafter, only the differences from the embodiment shown in Figure 3 will be described and like constructional members and features are described by like reference numerals. In the embodiment shown in Figure 4, the depressions 124 are shaped substantially similar to a Christmas tree. It is explicitly stated that the embodiment shown in Figure 2 may be modified such that the protrusions 116 are shaped substantially similar to a Christmas tree.

Figure 5 shows an enlarged cross-sectional view of the heat exchanger device 100 according to another embodiment of the present invention. Hereinafter, only the differences from the previous embodiments shown in Figures 2 to 4 will be described and like constructional members and features are described by like reference numerals. In the embodiment shown in Figure 5, in addition to the depressions 124 and/or protrusions 116, the fluid tight connection of the metal body 102 and the plastic shell 108 may be realized by chemical connection. Particularly, the metal body 102 and the plastic shell 108 are adhered to one another by means of at least one glue 128 and/or at least one resin 130.

Figure 6 shows an enlarged cross-sectional view of the heat exchanger device 100 according to another embodiment of the present invention. Hereinafter, only the differences from the previous embodiments shown in Figures 2 to 5 will be described and like constructional members and features are described by like reference numerals. In the embodiment shown in Figure 6, in addition to the depressions 124 and/or protrusions 116, the metal body 102 and the plastic shell 108 are connected to one another by means of at least partially injection moulding the material of the plastic shell 108. Particularly, the plastic shell 108 is formed in more than one step of the injection moulding such that plastic shell 108 comprises over moulded portions 132. Particularly, the overmoulded portions include a weld border 134 for connecting a first part or portion 136 of the plastic shell 108 and a second part or portion 138 of the plastic shell 108.

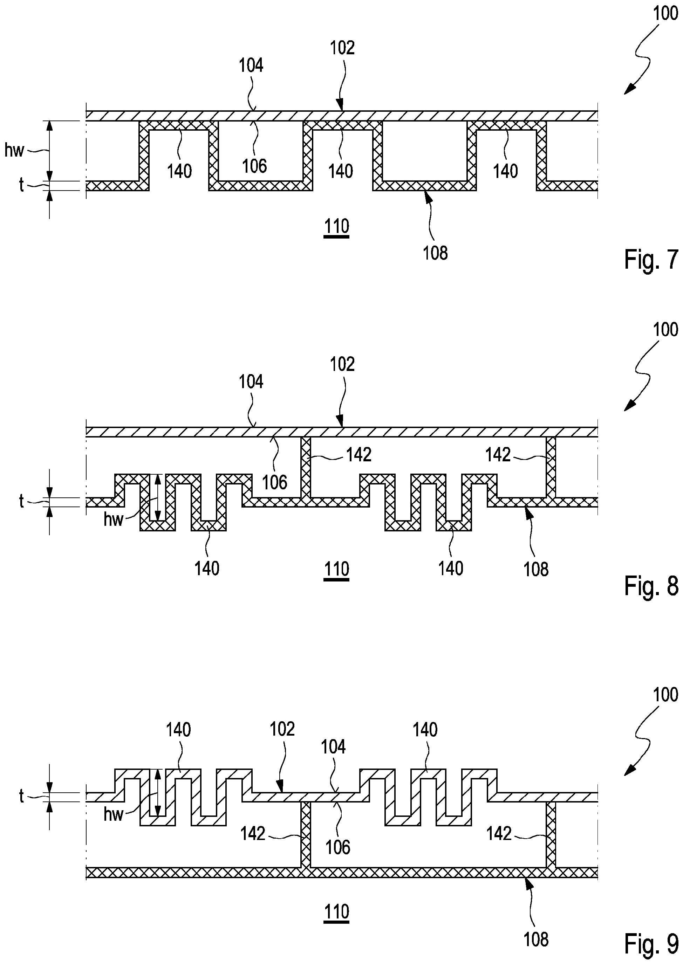

Figure 7 shows an enlarged cross-sectional view of the heat exchanger device 100 according to another embodiment of the present invention. Hereinafter, only the differences from the previous embodiments shown in Figures 2 to 6 will be described and like constructional members and features are described by like reference numerals. In the embodiment shown in Figure 7, in addition to the depressions 124 and/or protrusions 116, the plastic shell 108 comprises deformations 140 being wave-like shaped. The wave-like deformations 140 comprise a height hw being greater than a thickness t of the plastic shell 108 at least by factor 3. The wave-like deformations 140 are connected to the metal body 102 such as by means of a glue 128 or resin 130.

Figure 8 shows an enlarged cross-sectional view of the heat exchanger device 100 according to another embodiment of the present invention. Hereinafter, only the differences from the embodiment shown in Figure 7 will be described and like constructional members and features are described by like reference numerals. In the embodiment shown in Figure 8, the plastic shell 108 comprises ribs 142. The ribs 142 are connected to the metal body 102.

Figure 9 shows an enlarged cross-sectional view of the heat exchanger device 100 according to another embodiment of the present invention. Hereinafter, only the differences from the embodiment shown in Figure 8 will be described and like constructional members and features are described by like reference numerals. In the embodiment shown in Figure 9, in addition to the depressions 124 and/or protrusions 116, the metal body 102 comprises deformations 140 being wave-like shaped. The wave-like deformations 140 comprise a height being greater than a thickness t of the metal body 102 at least by factor 3. Further, the plastic shell 108 comprises ribs 142. The ribs 142 are connected to the metal body 102. Particularly, the ribs 142 are connected to the metal body 102 at portions without the wave-like deformations 140.

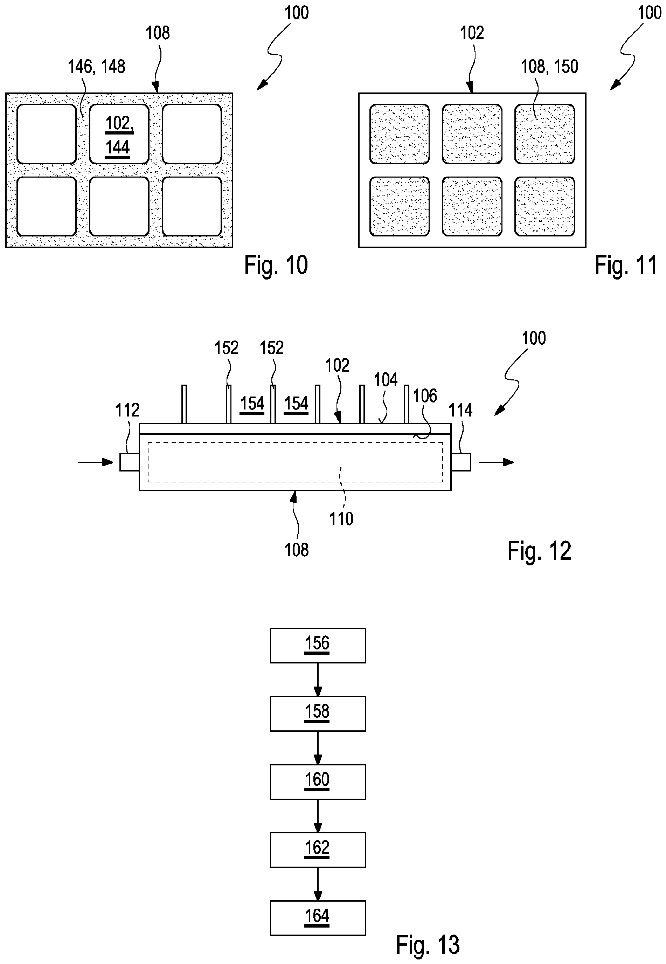

Figure 10 shows an enlarged cross-sectional view of the heat exchanger device 100 according to another embodiment of the present invention. Hereinafter, only the differences from the previous embodiments shown in Figures 2 to 9 will be described and like constructional members and features are described by like reference numerals. In the embodiment shown in Figure 10, in addition to the depressions 124 and/or protrusions 116, the metal body 102 is formed by a plurality of metal body portions 144. The metal body portions 144 are substantially plate shaped. The metal body portions 144 are spaced apart from one another by a distance gap 146. A compensation joint 148 is fitted in the distance gap 146. The compensation joint 148 is made of a thermally conductive thermoplastic elastomer. The compensation joint 148 may optionally be integrated into the plastic shell 108.

Figure 11 shows an enlarged cross-sectional view of the heat exchanger device 100 according to another embodiment of the present invention. Hereinafter, only the differences from the previous embodiments shown in Figures 2 to 10 will be described and like constructional members and features are described by like reference numerals. In the embodiment shown in Figure 11, in addition to the depressions 124 and/or protrusions 116, the plastic shell 108 is formed by a plurality of plastic shell portions 150. The plastic shell portions 150 are substantially plate shaped.

Figure 12 shows an enlarged cross-sectional view of the heat exchanger device 100 according to another embodiment of the present invention. Hereinafter, only the differences from the previous embodiments shown in Figures 2 to 11 will be described and like constructional members and features are described by like reference numerals. In the embodiment shown in Figure 12, in addition to the depressions 124 and/or protrusions 116, the heat exchanger device 100 further comprise at least one battery cell holder 152. The battery cell holder 152 is connected to the first surface 104 of the metal body 102 so as to enhance the cooling efficiency. The battery cell holder 152 may be formed as a thin frame having a slit portion 154 in its center for receiving a battery cell.

Figure 13 illustrates a flow chart of a method for manufacturing the heat exchanger device 100. The method comprises the following steps:
a) (denoted by reference numeral 156) providing a metal body 102, wherein the metal body 102 comprises a first surface 104 configured to be connected to the object to be cooled and at least second surface 106,
b) (denoted by reference numeral 158) forming a plurality of protrusions 116 and/or a plurality of depressions 124 at the second surface 106, wherein a gap 118 between adjacent protrusions 116 comprise a first cross-sectional area b1 and/or the depressions 124 comprise a first cross-sectional area b1, wherein the protrusions 116 comprise a second cross-sectional area b2 and/or a distance 126 between adjacent depressions 124 comprises a second cross-sectional area b2, wherein the first and second cross-sectional areas are determined at half height of the protrusions 116 and/or depressions 124, wherein a ratio of b1/(b1 +b2) is in a range of 0.1 to 0.8,
c) (denoted by reference numeral 160) providing a plastic shell 108, wherein the plastic shell 108 defines an interior space 110 configured to be filled with a cooling fluid,
d) (denoted by reference numeral 162) heating the metal body 102 to a predetermined temperature, particularly a plastic melting temperature of the plastic shell 108, and
e) (denoted by reference numeral 164) connecting the plastic shell 108 to the metal body 102 in a heated state such that the plastic shell 108 surrounds the protrusions 116 and/or fills the depressions 124 in a fluid tight manner.

Connecting the plastic shell 108 to the metal body 102 may include inserting the metal body 102 in a mold and forming the plastic shell 108 around the second surface 106 of the metal body 102 by means of injection moulding the plastic material of the plastic shell 108. The plastic shell 108 may be pressed to the second surface 106 of the metal body 102 in the heated state. The method may further comprise cooling the heat exchanger device 100 after connecting the plastic shell 108 to the second surface 106 of the metal body 102 in a controlled manner. The method may be computer-implemented.

### List of reference numbers

- 100: heat exchanger device
- 102: metal body
- 104: first surface
- 106: second surface
- 108: plastic shell
- 110: interior space
- 112: inlet
- 114: outlet
- 116: protrusion
- 118: gap
- 119: connection surface of metal body
- 120: connection surface of plastic shell
- 121: undercut
- 122: total perimeter
- 124: depression
- 126: distance
- 128: glue
- 130: resin
- 132: over moulded portion
- 134: weld border
- 136: first part or portion
- 138: second part or portion
- 140: deformation
- 142: rib
- 144: metal body portion
- 146: distance gap
- 148: compensation joint
- 150: plastic shell portion
- 152: battery cell holder
- 154: slit portion
- 156: providing a metal body
- 158: forming a plurality of protrusions and/or a plurality of depressions
- 160: providing a plastic shell
- 162: heating the metal body
- 164: connecting the plastic shell to the metal body

## Claims

1. A heat exchanger device (100) for conducting heat away from an object to be cooled, comprising
a metal body (102), wherein the metal body (102) comprises a first surface (104) configured to be connected to the object to be cooled and at least one second surface (106), wherein the at least one second surface (106) comprises a plurality of protrusions (116) and/or a plurality of depressions (124), and
a plastic shell (108), wherein the plastic shell (108) defines an interior space (110) configured to be filled with a cooling fluid, wherein the plastic shell (108) is connected to the metal body (102) such that the plastic shell (108) surrounds the protrusions (116) and/or fills the depressions (124) in a fluid tight manner, wherein a gap (118) between adjacent protrusions (116) comprise a first cross-sectional area b1 and/or the depressions (124) comprise a first cross-sectional area b1, wherein the protrusions (116) comprise a second cross-sectional area b2 and/or a distance (126) between adjacent depressions (124) comprises a second cross-sectional area b2, wherein the first and second cross-sectional areas are determined at a connection surface (119) of the metal body (102) and a connection surface (120) of the plastic shell (108), wherein a ratio of b1/(b1 +b2) is in a range of 0.1 to 0.8.

2. The heat exchanger device (100) according to the preceding claim, wherein the protrusions (116) and/or depressions (124) comprise a height in a range of 0.001 mm to 0.5 mm, preferably in a range of 0.01 mm to 0.5 mm, and more preferably in a range of 0.1 mm to 0.5 mm.

3. The heat exchanger device (100) according to any preceding claim, wherein the protrusions (116) and/or the depressions (124) are shaped so as to form undercuts (121) engaged by the plastic shell (108), wherein a ratio of a total area of the undercuts (121) and a total surface area of the protrusions (116) and/or depressions (124) is in a range of 0% to 50.0%.

4. The heat exchanger device (100) according to any preceding claim, wherein a ratio of a total perimeter (122) of the gap (118) between adjacent protrusions (116) and/or a total perimeter (122) of a depression to a sum of twice a height of the protrusions (116) and/or depressions (124) and b1 is greater than 1.5.

5. The heat exchanger device (100) according to any preceding claim, wherein the material of the metal body (102) comprises a first rigidity R1 and the material of the plastic shell (108) comprises a second rigidity R2, wherein the first cross-sectional area b1 and the second cross-sectional area b2 are formed such that a ratio b2/b1 is substantially proportional to a ration R1/R2.

6. The heat exchanger device (100) according to any preceding claim, wherein the metal body (102) and/or the plastic shell (108) comprise deformations (140) being wave-like shaped, wherein the wave-like deformations (140) comprise a height being greater than a thickness of the metal body (102) and/or plastic shell (108) at least by factor 3.

7. The heat exchanger device (100) according to any preceding claim, wherein the metal body (102) is formed by a plurality of metal body portions (144), wherein the metal body portions (144) are substantially plate shaped, wherein the metal body portions (144) are spaced apart from one another by a distance gap (146), wherein a compensation joint (148) is fitted in the distance gap (146).

8. The heat exchanger device (100) according to any preceding claim, wherein the plastic shell (108) is formed by a plurality of plastic shell portions (150), wherein the plastic shell portions (150) are substantially plate shaped, wherein the fluid tight connection of the metal body (102) and the plastic shell (108) is formed by means of direct engagement of the plastic shell (108) and the metal body (102).

9. The heat exchanger device (100) according to any preceding claim, wherein the fluid tight connection of the metal body (102) and the plastic shell (108) is formed by means of a material engagement and/or a positive locking connection.

10. The heat exchanger device (100) according to any preceding claim, wherein the fluid tight connection of the metal body (102) and the plastic shell (108) is formed by means of a physical connection and/or chemical connection.

11. The heat exchanger device (100) according to any preceding claim, wherein the depressions (124)/and/or protrusions (116) at the second surface (106) of the metal body (102) are formed by means of surface activation.

12. The heat exchanger device (100) according to any preceding claim, wherein the metal body (102) and the plastic shell (108) are adhered to one another by means of at least one glue (128) and/or at least one resin (130).

13. The heat exchanger device (100) according to any preceding claim, wherein the metal body (102) and the plastic shell (108) are connected to one another by means of at least partially injection moulding the material of the plastic shell (108), wherein the plastic shell (108) is formed in more than one step of the injection moulding such that plastic shell (108) comprises over moulded portions (132).

14. The heat exchanger device (100) according to any preceding claim, further comprising at least one battery cell holder (152), wherein the battery cell holder (152) is connected to the first surface (104) of the metal body (102).

15. A method for manufacturing the heat exchanger device (100) according to any preceding claim, comprising the following steps:
a) providing a metal body (102), wherein the metal body (102) comprises a first surface (104) configured to be connected to the object to be cooled and at least one second surface (106),
b) forming a plurality of protrusions (116) and/or a plurality of depressions (124) at the at least one second surface (106), wherein a gap (118) between adjacent protrusions (116) comprise a first cross-sectional area b1 and/or the depressions (124) comprise a first cross-sectional area b1, wherein the protrusions (116) comprise a second cross-sectional area b2 and/or a distance 126 between adjacent depressions (124) comprises a second cross-sectional area b2, wherein the first and second cross-sectional areas are determined at a connection surface (119) of the metal body (102) and a connection surface (120) of the plastic shell (108), wherein a ratio of b1/(b1 +b2) is in a range of 0.1 to 0.8,
c) providing a plastic shell (108), wherein the plastic shell (108) defines an interior space (110) configured to be filled with a cooling fluid,
d) heating the metal body (102) to a predetermined temperature, particularly a plastic melting temperature of the plastic shell (108), and
e) connecting the plastic shell (108) to the metal body (102) in a heated state such that the plastic shell (108) surrounds the protrusions (116) and/or fills the depressions (124) in a fluid tight manner.
